# EUROPEAN PATENT APPLICATION

(11) **EP 3 081 811 A1**
(43) Date of publication of application: **19.10.2016**
(21) Application number: 16163890.3
(22) Date of filing: 05.04.2016
(51) Int. Cl.: F04B 39/06, F04B 53/08

(54) **A PUMP GROUP FOR WATER CLEANERS**

(30) Priority: 16.04.2015 IT RE20150032
(71) Applicant: Annovi Reverberi S.p.A., 41122 Modena (IT)
(72) Inventor: Casalgrandi, Alessandro, 41100 MODENA (IT)
(74) Representative: Corradini, Corrado

(57) **Abstract**

An electrical water cleaner comprising an electric motor and a hydraulic pump activated thereby, a sealed external cylindrical casing containing the motor, a shaft of which is associated to a rotor and exits the casing through the two circular bottom walls thereof in a presence of seal rings, and bears at an end thereof means for activating the pump, and at an opposite end thereof an air-cooling fan, the fan being contained in a substantially cylindrical external casing which at least in part develops parallel to the cylindrical wall of the casing, a cylindrical stator of which is fixed internally of the casing, in which the casing is sealed and contains a quantity of dielectric cooling liquid able to convey heat generated by the electric motor into the cylindrical wall of the casing, from which the heat is removed by the air generated by the cooling fan.

## Description

The present invention relates to the sector of water cleaners, which are machines comprising an electric motor and a pump forming a single unit of small dimensions, able to generate a flow rate of water comprised between 5 and 11 litres/minute comprised between 70 and 150 bar.

In known machines this type of cooling of the electric motor is generally carried out using air.

The electric motor usually utilised has an absorbed power of about from 1.8KW to 3KW, and is of a type exhibiting a stator and a rotor contained in a body.

The body is struck by a cooling air current generated by a fan splined on an end of the rotating shaft of the electric motor, and is generally provided with external cooling fins.

The prolonged use of water cleaner machines, especially in hot climates, causes undesired increases in temperature of the rotor and stator, which negatively influence the performance of the motor.

Special technical solutions have been adopted to obviate the drawback, such as for example arranging the stator in contact with the body, but the heat dispersion has been revealed to be insufficient, especially in unfavourable atmospheric conditions.

The temperature of the body and the organs contained in it easily reach beyond 200°C, which causes an undesirable drop in performance of the motor and a consequent increase in the absorbed power.

To reduce the excessive overheating problem of the electric motor in water cleaners, devices are known, described in document GB 2029505, which include the body containing the rotor and the stator of the electric motor, as well as the water pumping means, to be kept sealed, and filled with a dielectric cooling liquid, such as oil, in which the rotor and stator are immersed.

In known devices, the body internally contains a cooling circuit passed-through by the water pumped by the water cleaner, which cools the oil or dielectric liquid in which the stator and the rotor are contained.

This known solution has been observed to be efficient but not free of drawbacks.

It has a very complicated construction as it has to include inside the body a cooling circuit of the cooling liquid has, through which water passes.

This causes the risk of loss or leakage of the water into the dielectric cooling liquid which, even in the presence of minimal quantities of water, compromises the dielectric characteristics of the cooling liquid, with a consequent impossibility of functioning of the electric motor.

The aim of the present invention is to obviate the above drawbacks with a solution that is simple and economical.

This aim is attained by an electric motor pump unit, especially for water cleaner machines, having the characteristics as recited in the independent claim.

The dependent claims relate to other characteristics, which in combination with those recited in the independent claim offer further advantages.

In substance the motor pump group of the invention comprises a containing body of the rotor and the stator of the electric motor.

The body is sealed, can be made in several parts, for example a central body closed at ends thereof by two bottom walls.

The central body preferably comprises external cooling fins, and the stator of the electric motor is fixed thereto in usual ways.

One of the two bottom walls comprises the rotating support means of an end of the rotor shaft; these means too are sealed due to the presence of a seal ring.

The rotor shaft crosses the cover so as to support a cooling fan.

The other bottom wall comprises the rotating support means of the other end of the rotor shaft; these means too are sealed.

One of the two bottom walls exhibits a compartment, external of the body, for housing a pump generally having an oscillating plate.

The other bottom wall supports an external casing which at least partly envelops the cylindrical wall of the body and contains a fan.

The fan is splined on the end of the rotor shaft which exits the bottom wall.

A hole is afforded in the central part of the body for filling the body with dielectric liquid, selected from among the normal multigrade oils available on the market.

The group can function with the axis of the electric motor whether vertical or inclined or horizontal.

Remaining in the field of water cleaners, the vertical or inclined arrangement is preferred in the case of non-professional applications as it enables developing compact and economical products, while the horizontal arrangement is usually preferred in professional applications, which consequently use motors having greater power.

The level of the cooling liquid, or oil, internally of the body, when the body is arranged with a horizontal axis, must be at least a half of the diameter of the body so as to brush at least the median line of the rotor.

It could even be greater up to almost completely filling the body.

The complete filling enables a greater contact of the cooling liquid with the body, thus facilitating a greater heat exchange with the outside. Further the greater quantity of liquid compensates the inevitable loss in performance caused by knocking.

The cooling liquid internally of the body facilitates transmission of the heat generated by the electric motor to the cylindrical wall of the body, and the dispersion thereof through the cooling fins present externally of the body. The advantages and functional characteristics of the invention will more fully emerge from the detailed description that follows, which describes a preferred embodiment thereof given by way of non-limited example illustrated in the enclosed table of drawings.

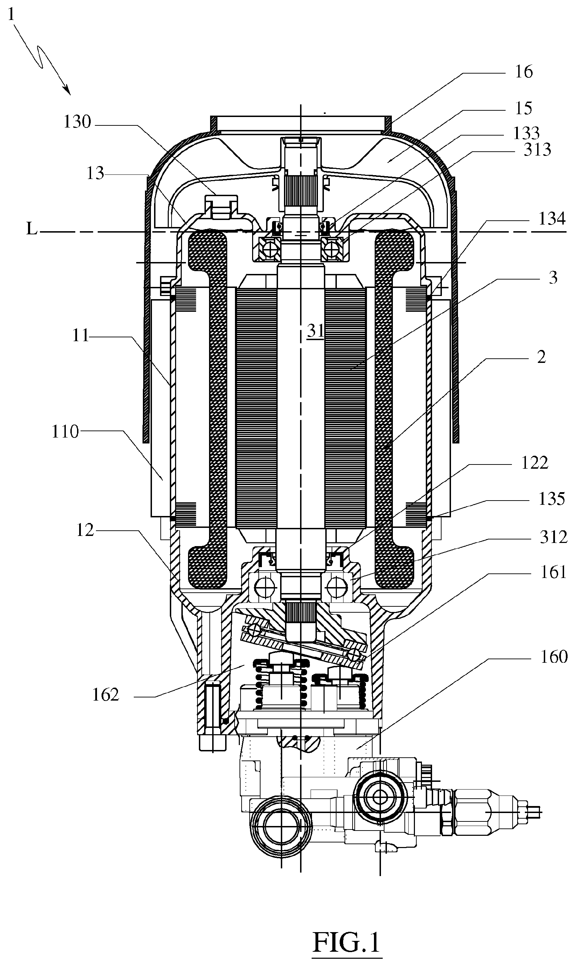

Figure 1 illustrates the invention in vertical axial section in a vertical functioning configuration.
Figure 2 illustrates the invention in axial section in a horizontal functioning configuration.

The figures show an electric motor 1 comprising a body 11, sealedly closed by two covers 12 and 13 and exhibit axial cooling fins 110.

The stator 2 of the electric motor is fixed to the body 11; the rotor 3 is instead splined on the shaft 31, ends of which are supported by bearings 312 and 313 mounted respectively by the covers 12 and 13.

The cover 12 exhibits a seal ring 122 of the output seating of the shaft 31, and likewise the cover 13 exhibits a seal ring 133 in the output seating of the shaft 31 and two front seals 134 and 135 between the covers 12,13.

The end of the shaft 31, which exits the cover 13 has splined thereon, on an axially grooved portion, the fan 15 closed in a casing 16 fixed to the body 11, and which envelops a portion of the cooling fans 110.

The end of the shaft 31 which exits from the cover 12 has splined thereon the tilting plate 161 of a hydraulic pump 160 contained in a compartment 162 solidly constrained to the cover 12.

The cover 13 exhibits a hole 130 closed by a suitable cap for introduction of oil into the body.

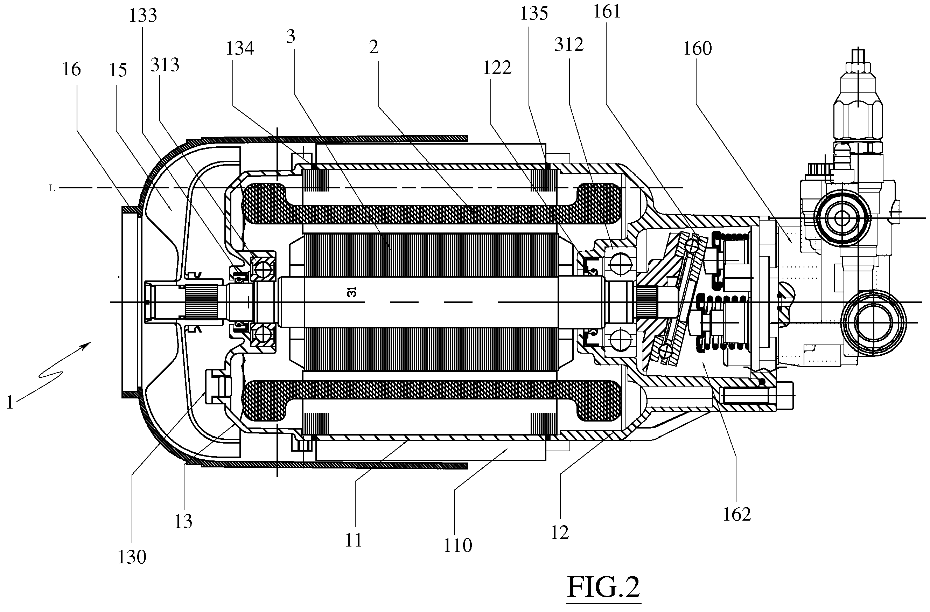

When the unit is mounted with the axis of the electric motor horizontal, as in figure 2, the line L indicates the level of the cooling liquid in the body.

The level is such that the cooling liquid, with the motor off, preferably reaches up to wetting the upper generatrix of the rotor.

The dielectric cooling liquid is selected from among normal multrigrade oils available on the market.

In the illustrated example the diameter of the body is 125 mm.

The axial length of the stator is 120 mm, but stators having body dimensions from 110 mm to 128 mm and lengths from 75 mm to 120 mm can be used. The electrical characteristics of the stator are the following: 220-240V50-60Hz and 115-127V60Hz.

The electrical characteristics of the rotor are the following: 220-240V50-60Hz and 115-127V60Hz.

The rotating speed of the rotor is 2800 rpm (50Hz) and 3400 rpm (60Hz). With a supply of alternating current 220 V, the electric motor absorbs a power of about 2.5 KW when the body is filled with the cooling liquid, while it absorbs a power of 3.0 KW in the absence of cooling liquid.

The present of the cooling liquid causes reduction by at least a third of the functioning temperature of the motor, which falls to about 80°C with respect to the 120°C detected without the presence of liquid, with a significant reduction of power absorbed.

The invention is not limited only the above-described example, and variants and improvements can be made to it without forsaking the protective scope of the claims that follow.

## Claims

1. An electrical water cleaner machine comprising an electric motor and a hydraulic pump activated thereby, a first sealed external cylindrical casing containing the stator and the rotor of said motor, a shaft of which is associated to the rotor and exits the casing through apertures of the two circular bottom walls thereof equipped with seal rings, and bears at one end of the first sealed external casing and external thereto the means for activating the pump, and at the opposite end of the casing an air-cooling fan, the fan being contained in a second substantially cylindrical external casing which at least in part develops parallel to the cylindrical wall of the first casing, **characterised in that** the casing is sealed and contains a quantity of dielectric cooling liquid able to convey heat generated by the electric motor into the cylindrical wall of the casing, from which the heat is removed by the air generated by the cooling fan.

2. The water cleaner machine of claim 1, **characterised in that** the casing exhibits external cooling fins on the cylindrical part thereof.

3. The water cleaner machine of claim 1, **characterised in that** the external casing comprises, at an end thereof, a substantially circular cover which forms a monolithic compartment open towards an outside of the casing for containing a hydraulic pump actuated by the rotor shaft.

4. The water cleaner machine of claim 1, **characterised in that** the dielectric cooling liquid is selected from among normal multigrade oils present in commerce.

5. The water cleaner machine of claim 1, **characterised in that** a level of the cooling liquid is such as to brush, when the axis of the electric motor is horizontal, at least a median line of the rotor.

6. The water cleaner machine of claim 1, **characterised in that** the electric motor exhibits following characteristics: 220-240 V, 50-60 Hz and 115-127 V, 50-60 Hz.
